(19) Europäisches Patentamt
European Patent Office
Office européen des brevets

(11) EP 0 586 880 B1

## (12) EUROPÄISCHE PATENTSCHRIFT

(45) Veröffentlichungstag und Bekanntmachung des Hinweises auf die Patenterteilung:
**18.12.1996 Patentblatt 1996/51**

(21) Anmeldenummer: **93112550.4**

(22) Anmeldetag: **05.08.1993**

(51) Int Cl.6: **C08G 81/02**, C08L 63/00, C09D 163/00, C08G 18/62, C08G 18/38 // C09D5/44, C08J3/07

### (54) Als Bindemittel geeignete Polymere

Polymers used as binders

Polymères utilisables comme liants

(84) Benannte Vertragsstaaten:
**AT BE CH DE ES FR GB IT LI NL PT SE**

(30) Priorität: **14.08.1992 DE 4227030**

(43) Veröffentlichungstag der Anmeldung:
**16.03.1994 Patentblatt 1994/11**

(73) Patentinhaber: **BASF Lacke + Farben AG**
**48165 Münster-Hiltrup (DE)**

(72) Erfinder:
- **Huemke, Klaus, Dr.**
  **D-67159 Friedelsheim (DE)**
- **Fobbe, Helmut, Prof. Dr.**
  **D-48165 Muenster (DE)**
- **Knoll, Konrad, Dr.**
  **D-68161 Mannheim (DE)**

(74) Vertreter: **Karau, Wolfgang, Dr. et al**
**BASF Aktiengesellschaft,**
**Patentabteilung ZDX - C 6**
**67056 Ludwigshafen (DE)**

(56) Entgegenhaltungen:
**EP-A- 0 238 001**

- **Derwent Publications Ltd., London, GB; AN 90-018272[03] & JP-A-1 297 452 (TORAY IND. INC.) 30. November 1989**
- **DATABASE WPI Derwent Publications Ltd., London, GB; AN 80-55626C[32] & JP-A-54 149 742 (HITACHI KK.) 24. November 1979**
- **Derwent Publications Ltd., London, GB; AN 90-018272[03] & JP-A-1 297 452**
- **DATABASE WPI Derwent Publications Ltd., London, GB; AN 80-55626C[32] & JP-A-54 149 742**

## Beschreibung

Die vorliegende Erfindung betrifft neue als Bindemittel geeignete Polymere, welche erhältlich sind durch Umsetzung

(A) eines Grundharzes mit einem mittleren Molekulargewicht $\overline{M}_w$ von 200 bis 5000, welches im Mittel pro Molekül 1 bis 3 Epoxygruppen oder Isocyanatgruppen als reaktive Gruppen enthält, mit

(B) einer Mischung aus

(B1) 5 - 50 Gew.-% eines mit primären Aminogruppen terminierten Polyisobutylens des mittleren Molekulargewichts $\overline{M}_w$ von 500 bis 5000, und

(B2) 50 - 95 Gew.-% eines primäre Aminogruppen tragenden Amidamins, welches durch Kondenstaion von diprimären Diaminen mit 2 - 20 C-Atomen mit aliphatischen $C_2$ - $C_{44}$-Dicarbonsäuren erhalten wird,

wobei die Mengen so bemessen werden, daß pro Äquivalent reaktiver Gruppen von (A) 1 bis 5 Äquivalente an primären Aminogruppen von (B) vorhanden sind.

Weiterhin betrifft die Erfindung ein Verfahren zur Herstellung solcher Polymere sowie deren Verwendung.

Bei der Beschichtung von Autokarosserien mittels Elektrotauchlackierung ist in neuerer Zeit besonders das Problem der mangelnden Kantenabdeckung und die damit verbundene starke Korrosion an den Kanten in den Vordergrund gerückt.

Unter dem Einfluß der Oberflächenspannung und bedingt durch niedrige Viskositäten des Naßfilmes während des Einbrennvorganges wird bei den herkömmlichen Elektrotauchlacksystemen ein mehr oder weniger starkes Zurückziehen der Lackschicht von den Substratkanten und damit eine Freilegung der Blechoberfläche sowie daraus resultierende verstärkte Korrosion in Salzsprüh- und Klimawechseltest beobachtet.

Aus der DE-A 39 26 635 ist ein speziell für die Kantenbeschichtung geeignetes Elektrobeschichtungsverfahren bekannt, bei dem der Elektrotauchlack mit magnetischen Partikeln versetzt wird.

In der EP-A 398 755 wird ein Elektrotauchlack mit guten Kantenschutzeigenschaften beschrieben, der aus einem blockierte Isocyanatgruppen tragenden selbstvernetzenden Polyepoxyharz und gelierten Partikeln auf Basis von Alkoxysilan-modifizierten Acrylcopolymeren und kolloidalem Silicat besteht.

Die EP-A 411 576 bezieht sich auf kationisch abscheidbare Polymere, die durch eine zweistufige Emulsionspolymerisation erhalten werden, wobei in der ersten Stufe Vinylsilanmonomere, hydroxyfunktionelle vinylische Monomere und weitere ungesättigte Monomere polymerisiert werden und in der zweiten Stufe in Gegenwart des Polymers der ersten Stufe eine Polymerisation von speziellen blockierten Isocyanaten und hydroxyfunktionellen Vinylmonomeren erfolgt.

Aus der EP-A 416 762 sind ebenfalls kationisch abscheidbare Lackmischungen mit guten Kantenschutzeigenschaften bekannt, welche ein kationisches Acrylatcopolymer, ein urethanisiertes Epoxyharz und einen blockierten Isocyanatvernetzer enthalten.

In der EP-A 439 074 werden Elektrotauchlackmischungen beschrieben, die aus einem kationischen hydroxyfunktionellen Harz, einem Epoxyharz und feinverteilten gelierten Polymerpartikeln auf Basis von Acrylaten bestehen.

Kationische Elektrotauchlacke mit guten Kantenschutzeigenschaften, die ein konventionelles kationisches Aminoepoxyharz und zusätzlich vernetzte Mikropartikel enthalten sind auch aus der EP-A 381 347 bekannt.

Wie aus den beschriebenen Anmeldungen zu ersehen ist, beschränken sich die bisherigen Lösungen des Kantenschutzproblems hauptsächlich auf Zusätze zu konventionellen Epoxyharzen, sei es in Form von magnetischen Partikeln oder von vernetzten Mikropartikeln wie Mikrogelen.

Aufgabe der vorliegenden Erfindung war es, Polymere zu finden, die als Bindemittel für Elektrotauchlacke geeignet sind und bei den beschichteten Gegenständen einen guten Kantenkorrosionsschutz bieten.

Demgemäß wurden die eingangs beschriebenen Polymere gefunden.

Als Grundharze (A) werden Polymere mit einem mittleren Molekulargewicht $\overline{M}_w$ von 200 - 5000, vorzugsweise von 500 - 5000, eingesetzt, welche im Mittel pro Molekül 1 bis 3 Epoxygruppen oder Isocyanatgruppen als reaktive Gruppen enthalten. Reaktive Gruppen bedeutet in diesem Sinne, daß sie gegenüber Aminogruppen reaktiv sind.

Geeignete Komponenten (A) sind beispielsweise Epoxyharze, die durch Umsetzung mehrwertiger Phenole mit einem Epihalohydrin erhältlich sind.

Dabei kann das Molekulargewicht durch das Molverhältnis der Ausgangsverbindungen gesteuert werden. Beispiele für solche mehrwertigen Phenole sind Resorcin, Hydrochinon, 2,2-Di-(4-hydroxyphenyl)propan (Bisphenol A), p,p'-Dihydroxybenzophenon, p,p'-Dihydroxydiphenyl, 1,1-Di(4-hydroxyphenyl)ethan, Bis-(2-hydroxynaphthyl)-methan, 1,5-Dihydroxynaphthylen und Novolake. Bisphenol A wird bevorzugt verwendet. Das bevorzugte Epihalohydrin ist Epichlorhydrin.

Neben Epoxidharzen aus mehrwertigen Phenolen und Epihalogenhydrin können Polyglycidylether mehrwertiger aliphatischer Alkohole wie Ethylenglykol, Diethylenglykol, Triethylenglykol, 1,2-Propylenglykol, 1,3-Propylenglykol, 1,4-Butandiol, 1,5-Pentandiol, 1,6-Hexandiol, 1,2,6-Hexantriol, Glycerin oder Bis-(4-hydroxycyclohexyl)-2,2-propan verwendet werden.

Ganz besonders bevorzugt sind solche Epoxidharze, die durch Umsetzung von Diglycidylethern von Bisphenol A mit mehrwertigen Phenolen, insbesondere Bisphenol A, oder durch Umsetzung mit langkettigen Alkylphenolen wie 4-Nonylphenol oder Monoetherglykolen wie 2-Phenoxypropanol-1 erhältlich sind. Solche Reaktionen können durch Amine wie Dibenzylamin katalysiert werden.

Weiterhin kommen als Komponenten (A) Aminoepoxyharze, welche noch freie Epoxidgruppen tragen, in Betracht. Solche Verbindungen sind in bekannter Weise durch partielle Umsetzung der Epoxidgruppen einer Polyglycidylverbindung mit sekundären Aminen oder Alkanolaminen erhältlich. Als Polyglycidylverbindungen kommen dabei die vorstehend beschriebenen Polyglycidylverbindungen in Betracht bei mittleren Molekulargewichten von 180 bis 2000. Als sekundäre Amine lassen sich beispielsweise gesättigte Dialkylamine mit 2 bis 36 C-Atomen wie z. B. Dimethylamin, Methylethylamin, Diethylamin, Dipropylamin oder Dibutylamin verwenden ebenso wie gesättigte Alkylalkanolamine mit 3 - 36 C-Atomen wie Methylethanolamin, Ethylethanolamin oder Methylisopropanolamin oder auch entsprechende Dialkanolamine wie Diethanolamin oder Diisopropanolamin.

Weiterhin kommen als Komponenten (A) Polyurethanharze in Betracht. Solche können in bekannter Weise aus aliphatischen und/ oder aromatischen Diisocyanaten und aliphatischen Diolen oder Polyolen erhalten werden. Als Diisocyanate seien vor allem Tetramethylendiisocyanat, Hexamethylendiisocyanat, Isophorondiisocyanat, Diphenylmethandiisocyanat, Toluylendiisocyanat, Napthylendiisocyanat und 4,4'-Diphenyletherdiisocyanat genannt. Als geeignete Diole kommen vor allem Ethylenglykokol, Diethylenglykol, Triethylenglykol, Propandiol, Butandiol, Hexandiol, Neopentylglykol oder Hydroxypivalinsäureneopentylglykolester in Frage. Es kommen aber auch höherwertige Alkohole in Betracht wie Trimethylolpropan, Glycerin, Pentaerythrit und Trimethylolbenzol.

Vorzugsweise werden als Komponenten (A) Gemische aus 50-95 Gew.-% Bisphenyl-A-Epoxiden und 5-50 Gew.-% Polyoxyalkylenpolyepoxiden verwendet.

Als Komponenten (B1) kommem mit primären Aminogruppen terminierte Polyisobutylene mit einem mittleren Molekulargewicht $\overline{M}_w$ von 500 bis 5000, vorzugsweise von 1000 bis 3000, in Betracht. Die Herstellung solcher Verbindungen ist in der deutschen Patentanmeldung DE-OS 40 30 914 beschrieben. Zur Herstellung werden als Ausgangsprodukte chlorallyl-terminierte Polyisobutylene eingesetzt, welche durch Umsetzung eines chlorterminierten Polyisobutylens mit Butadien in Gegenwart eines Friedel-Crafts-Katalysators erhältlich sind. Dieses chlorallyl-terminiertes Polymer wird mit Ammoniak oder einer Aminoverbindung umgesetzt, wobei im vorliegenden Fall Ammoniak oder primäre Polyamine wie Alkylendiamine z. B. Ethylendiamin, Butylendiamin, Hexamethylendiamin oder Triethylentetraaminen in Frage kommen.

Die Umsetzung des Chlorallylpolyisobutylens mit der Aminverbindung erfolgt bei Temperaturen von 60 - 100°C in Gegenwart einer HCl-bindenden Base wie Magnesium- oder Calciumoxid und ähnliche, in einem vorzugsweise polaren aprotischen organische Lösungsmittel. Anschließend wird das Produkt durch Extraktion aufgearbeitet. Die so erhaltenen Produkte enthalten in β-Stellung zu einer Aminogruppe noch eine allylische Doppelbindung. Diese kann bei Bedarf auf bekannte Weise hydriert werden, beispielsweise katalytisch mit Raney-Nickel.

Im vorliegenden Fall werden vorzugsweise solche Komponenten (B1) verwendet, bei denen die allylische Doppelbindung hydriert ist. Besonders bevorzugt ist ein aminoterminiertes Polyisobutylen, welches durch Umsetzung mit Triethylentetramin erhalten wurde.

Die Komponenten (B1) weisen Aminzahlen im Bereich von 20 bis 200 mg KOH/g Substanz auf. Eine genügend große Aminzahl ist erforderlich, um später die Dispergierbarkeit in Wasser zu erreichen.

Als Komponente (B2) sind primäre Aminogruppen enthaltende Amidamine geeignet, die durch Kondensationsreaktion aus einem diprimären Diamin und einer Dicarbonsäure sowie gewünschtenfalls einer Monocarbonsäure hergestellt werden können. Als geeignete Diamine kommen gesättigte Diamine mit 2 bis 20 C-Atomen in Betracht, beispielsweise unverzweigte Alkylendiamine wie Ethylendiamin, 1,3-Diaminopropan, 1,4-Diaminobutan, 1,5-Diaminopentan, 1,6-Diaminohexan oder verzweigte wie z. B. 2-Methyl-pentan-1,5-diamin oder 2-Ethyl-butan-1,4-diamin ebenso wie solche, die Cycloalkylstrukturen enthalten wie z. B. 4,4-Diaminocyclohexylmethan oder 2-(3-Aminopropyl)-cyclohexylamin. Geeignete Diamine können auch Oxa-Gruppen enthalten wie z. B. 4,9-Dioxa-dodecan-1,12-diamin oder 4,7-Dioxa-dodecan-1,10-diamin. Auch aromatische Diamine mit 6 bis 14 C-Atomen kommen in Betracht wie beispielsweise 4,4'-Diaminodiphenylmethan, 4,4'-Diaminodiphenylether, 4,4'-Diamino-diphenylsulfon, Toluylendiamin oder Xylylendiamin. Besonders bevorzugt werden diprimär-sekundäre Polyamine wie Diethylentriamin und Triethylentetramin.

Geeignete Dicarbonsäuren sind aliphatische Dicarbonsäuren mit 2 bis 44 C-Atomen, bevorzugt mit 28-36 C-Atomen. Bevorzugt werden dimerisierte ungesättigte $C_{14}$-$C_{22}$-Fettsäuren wie beispielsweise dimere Leinölfettsäure oder dimere Ricinenfettsäure.

Geeignete Monocarbonsäuren sind aliphatische $C_{12}$-$C_{18}$-Fettsäuren wie beispielsweise Ölsäure, Linolsäure oder Linolensäure oder Leinölfettsäure, die diese Fettsäuren als Gemisch enthält.

Die Dicarbonsäuren können allein zur Herstellung des Amidamins eingesetzt werden, es ist jedoch vorteilhaft, wenn 2 bis 20 mol.-%, bezogen auf die Dicarbonsäure, an Monocarbonsäure mitverwendet werden.

Damit die Carbonsäureamidamine noch freie primäre Aminogruppen enthalten, ist es erforderlich, mit einem ausreichenden Überschuß an diprimärem Amin zu arbeiten. Im allgemeinen wird ein 1,5 bis 10 molarer, bevorzugt ein 2 bis 6 molarer Überschuß an diprimärem Diamin verwendet, der gegebenenfalls nach der Kondensationsreaktion abdestilliert werden kann.

Die Umsetzung der Diamine mit den Carbonsäuren erfolgt im allgemeinen bei Temperaturen von 100 bis 250°C, vorzugsweise 150 bis 200°C. Zur leichteren Entfernung des bei der Kondensation gebildeten Wassers kann ein als Schleppmittel geeignetes Lösemittel wie z. B. Toluol oder Xylol zugegeben werden. Die Carbonsäuren können auch in Form ihrer Ester eingesetzt werden. In diesem Fall wird bei der Kondensation statt Wasser Alkohol abgespalten. Statt Fettsäuren können daher auch Fette, d. h. die Glycerinester der Fettsäuren, eingesetzt werden. Zur Herstellung der Komponente (B2) werden die primären Diamine und die Carbonsäuren in Äquivalenzverhältnissen $NH_2$:COOH von etwa 2:1 bis 10:1, bevorzugt 2,5:1 bis 5:1, eingesetzt.

Die so erhaltenen Amidamine weisen mittlere Molekulargewichte $\overline{M}_n$ im Bereich von 200 bis 5000, vorzugsweise von 500 bis 2500 auf. Die Aminzahlen liegen im Bereich von 150 bis 600, vorzugsweise 200 bis 450 mg KOH/g Substanz.

Bevorzugt sind Kondensationsprodukte aus gesättigten $C_2$-$C_6$-Alkylendiaminen, dimerer Linolensäure und Leinölfettsäure.

Die Mengen der Komponenten werden so bemessen, daß pro Äquivalent reaktiver Gruppen von (A) 1 bis 5, vorzugsweise 1 bis 3, an primären Aminoäquivalenten von (B) eingesetzt werden, wobei (B) zu 5 - 50 Gew.-%, vorzugsweise 10 - 40 Gew.-%, aus (B1) und zu 50 - 95 Gew.-%, vorzugsweise 60 - 90 Gew.-% aus (B2) besteht.

Die Umsetzung des Grundharzes (A) mit (B1) und (B2) kann so erfolgen, daß (A) mit dem aminterminierten Polyisobutylen (B1) und dem Amidamin (B2) homogen vermischt, mit Lösungsmitteln versetzt wird. Als Lösungsmittel kommen Butylglykol, Propylenglykolphenylether oder Propylenglykolmethylether in Betracht oder Gemische aus diesen.

Man läßt das Reaktionsgemisch anschließend bei 100 bis 150°C solange reagieren, bis keine freien Epoxyd- bzw. Isocyanatgruppen mehr vorhanden sind.

Die so erhaltenen Bindemittel weisen mittlere Molekulargewichte $\overline{M}_w$ von 1000 bis 20000, vorzugsweise von 2000 bis 10000 auf, bei Aminzahlen von 50 bis 250 mg KOH/g Festsubstanz.

Die erfindungsgemäßen Polymere lassen sich in organischen Lösungsmitteln wie Butylglykol mit Feststoffgehalten der Lösungen von 1 - 90 Gew.-% lösen.

Wäßrige Dispersionen der erfindungsgemäßen Polymere lassen sich vorzugsweise so erhalten, daß die Aminogruppen des Polymers ganz oder teilweise mit Säure neutralisiert werden und das protonierte Harz mit Wasser dispergiert wird. Als Säuren kommen Phosphorsäure, bevorzugt jedoch organische Säuren wie beispielsweise Ameisensäure, Essigsäure, Propionsäure oder Milchsäure in Betracht. Es ist auch möglich, das Polymere in ein Wasser/Säure-Gemisch zu geben. Anschließend können noch im Harz enthaltene organische Lösungsmittel abdestilliert werden.

Die so erhaltenen Dispersionen weisen im allgemeinen Feststoffgehalte von 10 - 45 Gew.-% auf.

Es ist auch möglich wäßrige Dispersionen der erfindungsgemäße Polymere mit Hilfe von üblichen Emulgatoren und Schutzkolloiden zu erhalten.

Bevorzugt werden durch Säuredispergierung erhaltene Dispersionen mit Feststoffgehalten von 20 - 35 Gew.-%.

Die erfindungsgemäßen wäßrigen Dispersionen eignen sich allgemein zur Herstellung von Überzügen.

Besondere Bedeutung haben die erfindungsgemäßen Polymere bzw. deren wäßrige Dispersionen bei der Herstellung von Elektrotauchlacküberzügen.

Die Elektrotauchlackierbäder können die erfindungsgemäßen Bindemittel in Mengen von 1 - 30 Gew.-%, vorzugsweise 5 - 20 Gew.-% enthalten.

Bei der Herstellung von Elektrotauchlacküberzügen werden bevorzugt solche Bindemittel eingesetzt, die durch Umsetzung eines Grundharzes, welches ein Epoxyharz ist, mit aminterminierten Polyisobutylen und einem Amidamin erhalten werden.

Sofern die Bindemittelpolymere keine selbstvernetzenden Gruppen enthalten, müssen die Elektrotauchlackbädern auch Vernetzer enthalten.

Geeignete Vernetzer für diese Bindemittel sind z. B. Harnstoffkondensationsprodukte wie sie in der DE-A 33 11 514 beschrieben sind oder phenolische Mannich-Basen gemäß der DE-A 34 22 457. In der EP-A 134 983 werden als weitere mögliche Vernetzer auch geblockte Isocyanate oder Aminoplastharze wie Harnstoff-Formaldehydharze, Melaminharze oder Benzoguanaminharze erwähnt.

Bevorzugte Vernetzer sind Verbindungen, die durch Aminoalkylierung von methanmodifizierten Epoxyharzen erhältlich sind. Solche Verbindungen sind in der deutschen Anmeldung P 4201054.3 beschrieben.

Weiterhin können Elektrotauchbäder noch Pigmentpasten und übliche Hilfsmittel enthalten. Pigmentpasten sind beispielsweise aus einem Reibharz und Pigmenten wie Titandioxid, Ruß oder Aluminiumsilikaten sowie Hilfs- und Dispergiermitteln erhältlich. Geeignete Reibharze sind beispielsweise in der EP-A 107 089 der EP-A 251 772 oder der deutschen Anmeldung P 41376390.0 beschrieben.

Die Abscheidung der Lackfilme bei der kathodischen Elektrotauchlackierung erfolgt üblicherweise bei 20-35°C, vorzugsweise 26 bis 32°C, während 5-500 sec, vorzugsweise 60 bis 300 sec bei Abscheidespannungen von 50-500 V. Der zu beschichtende Gegenstand wird als Kathode geschaltet.

Anschließend können die Lackfilme bei Temperaturen im Bereich von 120 - 200°C, vorzugsweise 140 - 180°C eingebrannt werden.

Auf diese Weise erhält man Elektrotauchlacküberzüge, die bei guten mechanischen Eigenschaften und gutem Flächenkorrosionsschutz ein ausgezeichnetes Kantenkorrosionsschutzverhalten aufweisen.

Herstellung eines erfindungsgemäßen Bindemittels,

Beispiele 1 bis 4

Herstellung des Vorproduktes (A)

11,3 kg eines Diglycidylethers auf Basis Bisphenol A und Epichlorhydrin (EEW 188) wurden mit 3,08 kg Bisphenol A (9,06 mol) und 4,30 g Triphenylphosphin in 750 g 1,2-Propylenglykolmonophenylether auf 130°C erhitzt, bis ein EEW von 435 erreicht war, in 5 kg Isobutanol und 500 g Butylglykol gelöst und bei 50-55°C mit 1,01 kg Methylethanolamin (13,5 mol) solange umgesetzt, bis ein EEW von 750 erreicht war. (EEW = Epoxidequivalentgewicht)

Herstellung des Vorproduktes (B2)

Das Amidamin wurde durch Umsetzung von 5,15 kg Diethylentriamin (50 mol), 7,25 kg dimerer Leinölfettsäure (13,0 mol) und 1,40 kg Leinölfettsäure (5,0 mol) in 1,5 kg Xylol bei 150-175°C unter Abdestillieren des Reaktionswassers hergestellt. Das so erhaltene Produkt hatte einen Feststoffgehalt von 90 %, eine Aminzahl von 464 mg/g und eine Säurezahl von < 2 mg/g.

Zu dem Vorprodukt (A) werden die in der nachstehenden Tabelle I angegebenen Mengen des Vorproduktes (B2) und eines Bis-triethylentetramin-terminierten Polyisobutylens (TETA-PIB) mit einem mittleren Molekulargewicht $\overline{M}_w$ von 2000 und einer Aminzahl von 135 ± 5 mg KOH/g nach homogener Vermischung zugegeben und mit der jeweils angegebenen Menge eines Lösungsmittelgemisches aus Isobutanol und n-Butylglykol (Verhältnis I : BG = 9 : 1) versetzt. Anschließend läßt man das Reaktionsgemisch noch zwei Stunden bei 80°C nachreagieren.

Zum Vergleich wurde ein Bindemittel hergestellt (Beispiel 5), welches kein Polyisobutylen enthält, ansonsten aber analog aus den Vorprodukten (A) und (B2) erhalten wurden (Mengen siehe Tabelle I).

Tabelle I

| Bindemittel | Amidamin (B2) [g] | TETA-PIB (B1) [g] | Lösemittel [g] | Aminzahl [mg KOH/g] |
|---|---|---|---|---|
| Beispiel 1 | 3950 | 1553 | 2230 | 132 |
| Beispiel 2 | 3511 | 3106 | 2810 | 127 |
| Beispiel 3 | 3072 | 4659 | 3310 | 119 |
| Beispiel 4 | 2195 | 7765 | 7250 | 105 |
| Beispiel 5 | 4389 | - | 1690 | 137 |

Die Bindemittel lt. Beispiel 1-3 und Beispiel 5 weisen einen Feststoffgehalt von 65 Gew.-% auf, das Bindemittel lt. Beispiel 4 einen Feststoffgehalt von 70 Gew.-%.

Herstellung des Vernetzers

1,5 kg eines Diglycidylethers auf Basis von Bisphenol A und Epichlorhydrin (EEW 188) wurden mit 2,19 kg Bisphenol A und 1,25 g Triphenylphosphin zwei Stunden auf 150 bis 160°C erhitzt und anschließend mit 2,1 kg Methylisobutylketon verdünnt.

Zur Herstellung des halbverkappten Diisocyanats wurden 2,4 kg Toluylendiisocyanat (Gemisch mit einem Anteil des 2,4 und des 2,6-Isomeren von 80 : 20) in 871 g Toluol gelöst und bei 50°C mit einer Mischung aus 722 g Dimethylaminopropanol und 323 g Ethanol umgesetzt.

Die Lösung des halbverkappten Diisocyanats wurde während einer Zeitspanne von 90 min zu der Phenolharzlösung getropft, wobei die Reaktionstemperatur so gehalten wurde, daß 90°C nicht überschritten wurden. Anschließend wurden 1,55 kg Dibutylamin und 361 g Paraformaldehyd zugesetzt und die Mischung sechs Stunden bei 90 - 95°C gehalten.

Dann wurde das entstandene Reaktionswasser unter Vakuum abdestilliert. Die Vernetzerlösung wies einen Feststoffgehalt von 80 Gew.-% und eine Aminzahl von 120 mg KOH/g Festsubstanz auf.

Herstellung der Bindemitteldispersionen

1,18 kg Bindemittelharz mit einem Feststoffgehalt von 65 Gew.-% (Bsp. 1,2,3,5) bzw. 1,27 kg Bindemittelharz mit einem Feststoffgehalt von 70 Gew.-% (Bsp. 4) wurden mit den in der nachstehenden Tabelle II angegebenen Mengen an 50 Gew.-%iger wäßriger Milchsäure versetzt. Die homogenisierte Mischung wurde bei 50°C unter Rühren portionsweise mit den jeweils angegebenen Mengen Wasser versetzt. Dann wurden bei 40° bis 50°C und 100 mbar ca. 1,2 kg Lösungsmittel/Wasser-Gemisch abdestilliert, wobei gleichzeitig 1,2 kg Wasser zugesetzt wurden. Man erhielt feinteilige, stabile Dispersionen.

Tabelle II

| Dispersion | Bindemittel lt. Bsp. | Säure [g] | Wasser [g] | Feststoffgehalt [Gew.-%] |
|---|---|---|---|---|
| D1 | 1 | 67,8 | 1188 | 35,1 |
| D2 | 2 | 65,2 | 1191 | 35,0 |
| D3 | 3 | 61,1 | 1195 | 35,1 |
| D4 | 4 | 54,0 | 1110 | 34,9 |
| D5 | 5 | 70,4 | 1185 | 35,0 |

Herstellung der Vernetzerdispersion

394,7 g des Vernetzerharzes mit einem Feststoffgehalt von 80 % wurden mit 11,55 g Essigsäure versetzt und auf 50°C erhitzt. Anschließend gab man 462,8 g Wasser zu und destillierte darauf bei 100 mbar bei 40 bis 50°C unter Zulauf von 225 g Wasser ein Gemisch aus 225 g Lösemittel/Wasser ab. Man erhielt eine feinteilige, stabile Dispersion mit einem Festgehalt von 35 Gew.-%.

Herstellung der Pigmentpaste

Zunächst wurde ein Reibharz nach der folgenden Vorschrift hergestellt:
Eine Mischung aus 805,4 g Diglycidylether auf Basis von Bisphenol A mit einem EEW von 188, 379,2 g Polyoxybutylendiglycidylether mit einem EEW von 415, 205,2 g Bisphenol A, 117,8 g Dodecylphenol, 98,2 g Nonylphenol und 42,6 g Propylenglykolphenylether wurde auf ca. 130°C erhitzt und mit 0,5 g Triphenylphosphin versetzt. Anschließend wurde das Reaktionsgemisch durch Kühlung solange bei dieser Temperatur gehalten, bis ein EEW von 475 erreicht war, worauf man 89,7 g Propylenglykolmonomethylether zulaufen ließ. Binnen einer Stunde wurden zunächst 478,8 g Leinölfettsäure und dann 222,6 g Diethylaminopropylamin zugegeben, wobei, wenn nötig unter Kühlen, die Reaktionstemperatur auf 80°C gehalten wurde. Nach dem der Epoxidwert auf Null abgesunken war, wurden 102,6 g Paraformaldehyd zugesetzt und die Reaktionsmischung bei 80 - 90°C bis zum vollständigen Formaldehydumsatz gerührt. Das so erhaltene Reibharz wies einen Festgehalt von 94,8 Gew.-% und eine Aminzahl von 81 mg KOH/g auf.

Zur Herstellung der Pigmentpaste wurden 388,2 g des so erhaltenen Reibharzes mit 77,6 g 50 Gew.-%iger wäßriger Milchsäure und 845 g Wasser vermischt. Dann wurden 800 g Titandioxid, 11,0 g Ruß und 50 g basisches Bleisilikat zugesetzt und die ganze Mischung auf einer Kugelmühle bis zu einer Kornfeinheit von < 7 μm vermahlen. Die Paste wies einen Festkörpergehalt von 60 Gew.-% auf.

Herstellung der Elektrotauchlackbäder

Mit den oben beschriebenen Dispersionen wurden nun unter Zusatz der Pigmentpaste verschiedene Elektrotauchlackbäder angesetzt. Dazu wurden 1062 g der Bindemitteldispersionen mit 926 g der Vernetzerdispersion sowie 620 g der Paste zunächst intensiv gemischt und anschließend durch Verdünnen mit VE-Wasser auf ein Badvolumen von 5000 ml eingestellt, wobei sich ein Festgehalt der Bäder von 21 % ergab. Man ließ die Bäder anschließend 5 Tage bei Raumtemperatur altern.

Mit den so hergestellten Elektrotauchlacken wurden auf als Kathode geschalteten phosphatierten Stahlblechen und unbehandelten Stahlblechen (Tiefziehblechen) bei 27°C während 2 min Lacke abgeschieden, die nach dem 25 minütigen Einbrennen bei 140°C in einem Umluftofen Schichtdicken zwischen 22 und 25 µm aufwiesen.

Die Abscheidespannung sowie die Prüfergebnisse der mechanischen Prüfung sind in der nachfolgenden Tabelle III aufgeführt.

Tabelle III

| Bad/Dispersion Nr. | U [V] | SD [µm] | Verlauf 1-5 | RI [Nm] | ET [mm] | GS 1-5 |
|---|---|---|---|---|---|---|
| 1/D1 | 340 | 23 | 1-2 | 15,8 | 8,3 | 1 |
| 2/D2 | 340 | 22 | 2 | 15,8 | 8,1 | 1 |
| 3/D3 | 350 | 23 | 2 | 15,8 | 7,9 | 1 |
| 4/D4 | 320 | 25 | 2-3 | 18,8 | 8,0 | 1-2 |
| 5/D5 | 350 | 23 | 1-2 | 11,2 | 8,1 | 1-2 |

SD: Schichtdicke
RI: Reverse Impact; Bestimmung mit einem Mandrel Impact Tester der Fa. Gardner nach ASTM D 2794
ET: Erichsen-Tiefung nach ISO 1520
GS: Gitterschnitt; Note 1: keine Enthaftung
　　　　　　Note 5: vollständige Enthaftung
Verlauf: Note 1: sehr gut
　　　　　Note 5: unzureichend

Die erfindungsgemäßen Lacke weisen eine gleich gute Haftung und Elastizität auf wie ein herkömmlicher Lack (Beispiel 5).

Weiterhin wurden die abgeschiedenen Lackfilme einem Klimawechseltest (KWT) nach DIN 50 021 (10 Zyklen; Filme auf phosphatisierten Blechen) unterworfen. An Lackfilmen, welche auf unbehandelten Tiefziehblechen abgeschieden worden waren, wurde ein Salzsprühtest (SST) nach DIN 50 017 über 360 Stunden durchgeführt.

Benotet wurde zum einen der Flächenrost F:

Note 0 = kein Rost

Note 5 = starke Verrostung mit Blasenbildung

Ebenfalls benotet wurde der Kantenrost K:

Note 0 = kein Angriff

Note 5 = freigelegte Kante mit starker Verrostung

Gemessen wurde die Unterwanderung U durch Rost an einem präparierten Ritz in mm (gemittelt über die Gesamtlänge an einer Seite).

Die Ergebnisse sind in Tabelle IV aufgeführt.

Tabelle IV

| Bad Nr. | KWT K/F/U | SST K/F/U |
|---|---|---|
| 1 | 2/0/0,5 | 4/1/0,9 |
| 2 | 1/0/0,6 | 2/0/1,0 |
| 3 | 0/0/0,6 | 1/0/0,9 |
| 4 | 0/0/0,5 | 0/0/0,9 |
| 5 | 4/0/0,4 | 5/2/0,9 |

Es ist deutlich zu erkennen, daß die Beladung der Kante und der daraus resultierende Kantenkorrosionsschutz bei den erfindungsgemäßen Lacken verbessert ist. Selbst bei unbehandelten Blechen ist ein sehr guter Kantenkorrosionsschutz gegeben.

**Patentansprüche**

1. Als Bindemittel geeignete Polymere, erhältlich durch Umsetzung von

   (A) einem Grundharz mit einem mittleren Molekulargewicht $\overline{M}_w$ von 200 bis 5000, welches im Mittel pro Molekül 1 bis 3 Epoxygruppen oder Isocyanatgruppen als reaktive Gruppen enthält,
   mit

   (B) einer Mischung aus

   (B1) - 50 Gew.-% eines mit primären Aminogruppen terminierten Polyisobutylen des mittleren Molekulargewichts $\overline{M}_w$ von 500 bis 5000, und
   (B2) 50 - 95 Gew.-% eines primäre Aminogruppen tragenden Amidamins, welches durch Kondensation von diprimären Diaminen mit 2 bis 20 C-Atomen mit aliphatischen $C_2$ - $C_{44}$-Dicarbonsäuren erhalten wird,

   wobei die Mengen so bemessen werden, daß pro Äquivalent reaktiver Gruppe von (A) 1 bis 5 Äquivalente an primären Aminogruppen von (B) vorhanden sind.

2. Als Bindemittel geeignete Polymere nach Anspruch 1, enthaltend eine Komponente (B2), bei deren Herstellung 2 - 20 Mol.-% der Dicarbonsäure durch eine aliphatische $C_{12}$-$C_{18}$-Monocarbonsäure ersetzt werden.

3. Als Bindemittel geeignete Polymere nach Anspruch 1 oder 2, bei denen als Komponente (A) ein Epoxyharz eingesetzt wird.

4. Verfahren zur Herstellung eines Polymeren gemäß einem der Ansprüche 1 bis 3, dadurch gekennzeichnet, daß man

   (A) ein Grundharz mit einem mittleren Molekulargewicht $\overline{M}_w$ von 200 bis 5000, welches im Mittel pro Molekül 1 - 3 Epoxygruppen oder Isocyanatgruppen als reaktive Gruppen enthält,
   mit

   (B) einer Mischung aus

   (B1) 5 - 50 Gew.-% eines mit primären Aminogruppen terminierten Polyisobutylen des mittleren Molekulargewichts $\overline{M}_w$ von 500 bis 5000, und
   (B2) 50 - 95 Gern.-% eines primäre Aminogruppen tragenden Amidamins, welches durch Kondensation von diprimären Diaminen mit 2 bis 20 C-Atomen mit aliphatischen $C_2$ - $C_{44}$-Dicarbonsäuren erhalten wird,

   im Gegenwart von organischen Lösungsmitteln umsetzt,

   wobei die Mengen so bemessen werden, daß pro Äquivalent reaktiver Gruppen von (A) 1 bis 5 Äquivalente an primären Aminogruppen von (B) vorhanden sind.

5. Wäßrige Dispersionen, enthaltend 1 - 30 Gew.-% eines Polymers gemäß einem der Ansprüche 1 bis 4 in protonierter Form.

6. Verwendung eines Polymers gemäß einem der Ansprüche 1 bis 4 als Bindemittel für Überzüge.

7. Verwendung von wäßrigen Dispersionen gemäß Anspruch 5 zur Herstellung von Überzügen.

8. Elektrotauchbäder für die kathodische Elektrotauchlackierung, enthaltend wäßrige Dispersionen gemäß Anspruch 5.

9. Beschichteter Gegenstand, erhältlich durch Beschichten eines Substrats mit einem der Polymere gemäß einem der Ansprüche 1 bis 4.

10. Beschichteter Gegenstand, erhältlich durch kathodische Elektrotauchlackierung mit einem Elektrotauchbad gemäß Anspruch 8.

**EP 0 586 880 B1**

**Claims**

1. A polymer which is suitable as a binder and is obtainable by reacting

    (A) a base resin which has an average molecular weight $\overline{M}_w$ of from 200 to 5,000 and contains on average from 1 to 3 epoxy or isocyanato groups as the reactive groups per molecule
    with
    (B) a mixture of

       (B1) 5 to 50% by weight of a polyisobutylene terminated by primary amino groups and having an average molecular weight $\overline{M}_w$ of from 500 to 5,000 and
       (B2) 50-95% by weight of an amidoamine carrying primary amino groups and obtained by condensation of diprimary diamines of 2 to 20 carbon atoms with aliphatic $C_2$-$C_{44}$-dicarboxylic acids,

    the amounts being such that from 1 to 5 equivalents of primary amino groups of (B) are present per equivalent of the reactive group of (A).

2. A polymer which is suitable as a binder, as claimed in claim 1, containing a component (B2) in whose preparation 2-20 mol % of the dicarboxylic acid are replaced with an aliphatic $C_{12}$-$C_{18}$-monocarboxylic acid.

3. A polymer which is suitable as a binder, as claimed in claim 1 or 2, in which an epoxy resin is used as component (A).

4. A process for the preparation of a polymer as claimed in any of claims 1 to 3, wherein

    (A) a base resin which has an average molecular weight $\overline{M}_w$ of from 200 to 5,000 and contains on average from 1 to 3 epoxy or isocyanato groups as the reactive groups per molecule
    is reacted with
    (B) a mixture of

       (B1) 5 to 50% by weight of a polyisobutylene which is terminated by primary amino groups and has an average molecular weight $\overline{M}_w$ of from 500 to 5,000 and
       (B2) 50-95% by weight of an amidoamine which carries primary amino groups and is obtainable by condensation of diprimary diamines of 2 to 20 carbon atoms with aliphatic $C_2$-$C_{44}$-dicarboxylic acids,

    in the presence of an organic solvent,

    the amounts being such that from 1 to 5 equivalents of primary amino groups of (B) are present per equivalent of reactive groups of (A).

5. An aqueous dispersion containing 1-30% by weight of a polymer as claimed in any of claims 1 to 4 in protonated form.

6. Use of a polymer as claimed in any of claims 1 to 4 as a binder for coatings.

7. Use of an aqueous dispersion as claimed in claim 5 for the production of coatings.

8. An electrocoating bath for cathodic electrocoating, containing an aqueous dispersion as claimed in claim 5.

9. A coated article, obtainable by coating a substrate with one of the polymers as claimed in any of claims 1 to 4.

10. A coated article, obtainable by cathodic electrocoating with an electrocoating bath as claimed in claim 8.

**Revendications**

1. Polymères utilisables comme liants, que l'on peut obtenir par réaction

    (A) d'une résine de base ayant un poids moléculaire moyen $\overline{M}_w$ de 200 à 5000, qui contient en moyenne par

9

molécule de 1 à 3 groupements époxydes ou isocyanates en tant que groupements réactifs,
avec
(B) un mélange

(B1) de 5 - 50 % en poids d'un polyisobutylène terminé par des groupements amino primaires de poids moléculaire moyen $\overline{M}_w$, de 500 à 5000, et
(B2) de 50 à 95 % en poids d'une amidamine portant des groupements amino primaires, qui est obtenue par condensation de diamines diprimaires ayant de 2 à 20 atomes de C avec des acides dicarboxyliques aliphatiques en $C_2$-$C_{44}$,

les quantités étant mesurées de telle manière que, par équivalent de groupement réactif de (A), sont présents de 1 à 5 équivalents de groupements amino primaires de (B).

2. Polymères utilisables comme liants selon la revendication 1, contenant un composant (B2), lors de la préparation duquel on remplace 2 - 20 % en moles de l'acide dicarboxylique par un acide monocarboxylique aliphatique en $C_{12}$-$C_{18}$.

3. Polymères utilisables comme liants selon la revendication 1 ou 2, pour lesquels on utilise en tant que composant (A) une résine époxyde.

4. Procédé de préparation d'un polymère conformément à l'une quelconque des revendications 1 à 3, caractérisé en ce que l'on fait réagir en présence de solvants organiques

(A) une résine de base ayant un poids moléculaire moyen $\overline{M}_w$ de 200 à 5000, qui contient en moyenne par molécule de 1 à 3 groupements époxydes ou isocyanates en tant que groupements réactifs,
avec
(B) un mélange

(B1) de 5 - 50 % en poids d'un polyisobutylène terminé par des groupements amino primaires de poids moléculaire moyen $\overline{M}_w$ de 500 à 5000, et
(B2) de 50 à 95 % en poids d'une amidamine portant des groupements amino primaires, qui est obtenue par condensation de diamines diprimaires ayant de 2 à 20 atomes de C avec des acides dicarboxyliques aliphatiques en $C_2$-$C_{44}$,

les quantités étant mesurées de telle manière que, par équivalent de groupement réactif de (A), sont présents de 1 à 5 équivalents de groupements amino primaires de (B).

5. Dispersions aqueuses, contenant 1 - 30 % en poids d'un polymère conformément à l'une quelconque des revendications 1 à 4 sous forme protonée.

6. Utilisation d'un polymère selon l'une quelconque des revendications 1 à 4 en tant que liant pour revêtements.

7. Utilisation de dispersions aqueuses conformément à la revendication 5 en vue de la préparation de revêtements.

8. Bains de trempage électrophorétique pour le laquage par trempage électrophorétique cathodique, contenant des dispersions aqueuses conformément à la revendication 5.

9. Article revêtu, que l'on peut obtenir par revêtement d'un substrat à l'aide de l'un des polymères selon l'une quelconque des revendications 1 à 4.

10. Article revêtu, que l'on peut obtenir par laquage par trempage électrophorétique cathodique à l'aide d'un bain de trempage électrophorétique conformément à la revendication 8.